# EUROPEAN PATENT APPLICATION

(11) **EP 4 523 785 A1**
(43) Date of publication of application: **19.03.2025**
(21) Application number: 23803903.6
(22) Date of filing: 22.05.2023
(51) Int. Cl.: B01J 13/00, C01B 33/32

(54) **METHOD FOR PREPARING AEROGEL**

(30) Priority: 11.05.2022 KR 20230059523
(71) Applicant: NS&T Inc., Suwon-si, Gyeonggi-do 16681 (KR)
(72) Inventor: CHOI, Ik Jun, Incheon 21986 (KR); CHOI, Kang Hee, Suwon-si, Gyeonggi-do 16446 (KR); KANG, Dong Hee, Hwaseong-si, Gyeonggi-do 18414 (KR); CHOI, Jeong Won, Seoul 08298 (KR); PARK, Byung Je, Bucheon-si Gyeonggi-do 14774 (KR); PARK, Seung Mo, Suwon-si Gyeonggi-do 16418 (KR); JEONG, Yeong Jun, Hwaseong-si Gyeonggi-do 18306 (KR); JUNG, Sun Yong, Suwon-si Gyeonggi-do 16336 (KR)
(74) Representative: Witte, Weller & Partner Patentanwälte mbB
(86) International application number: PCT/KR2023/006938
(87) International publication number: WO 2023/219480

(57) **Abstract**

The present invention provides a method for preparing an aerogel, comprising the steps of: reacting water glass with a first material in a reaction tank to obtain a hydrogel; moving the hydrogel to a solvent substitution tank, and then reacting the hydrogel with a second material in the solvent substitution tank to obtain an organogel; and moving the organogel to a dryer, and then drying the organogel in the dryer to obtain aerogel powder.

## Description

### [Technical Field]

The present invention relates to a method of preparing an aerogel.

### [Background Art]

In general, aerogels are advanced materials having a high porosity of up to 99%, a low refractive index of 1.01 to 1.1, a high transparency of 90% or more, a high specific surface area of 1000 m²/g or more, a very low thermal conductivity of 0.02 W/mK or less, and the like.

An aerogel having these properties is evaluated as having high applicability as energy and environmental materials and as materials for the advancement of the electronics industry due to its unique thermal, electrical, and optical properties. Therefore, attempts have been made to apply the aerogel as a super-insulating material, an acoustic wave delay material, a catalyst support, and an interlayer insulating material for high-speed circuits of next-generation semiconductors.

However, aerogels have faced many difficulties in mass production for commercial use despite the above excellent properties. It takes a long time to manufacture an aerogel, and a lot of investment is required in building production facilities. Also, the quality of mass-produced aerogels may be inferior to that of aerogels produced in small quantities in the laboratory.

### [Disclosure]

### [Technical Problem]

The present invention is directed to providing a method of preparing an aerogel, which is capable of reducing production time and implementing efficient production equipment.

The present invention is also directed to providing a method of preparing an aerogel, which is capable of increasing the quality of a final product in addition to the above-described improvement in productivity.

### [Technical Solution]

According to one aspect of the present invention, there is provided a method of preparing an aerogel, which includes reacting water glass with a first material in a reaction tank to obtain a hydrogel; transferring the hydrogel to a solvent substitution tank and then reacting the hydrogel with a second material in the solvent substitution tank to obtain an organogel; and transferring the organogel to a dryer and then drying the organogel in the dryer to obtain aerogel powder.

The first material may include pure water, nitric acid, and hexamethyldisilazane (HMDS), which may be sequentially input into the reaction tank.

In an embodiment, the method includes reacting water glass with a first material in a reaction tank to obtain a hydrogel; transferring the hydrogel to a solvent substitution tank and then reacting the hydrogel with a second material in the solvent substitution tank to obtain an organogel; and transferring the organogel to a dryer and then drying the organogel in the dryer to obtain aerogel powder, wherein the first material may include pure water, nitric acid, and HMDS, the second material may not be input into the reaction tank, and the second material may include n-hexane.

The method may further include washing the reaction tank after the transfer of the hydrogel to the solvent substitution tank.

The washing of the reaction tank after the transfer of the hydrogel to the solvent substitution tank may include spraying pure water on an inner surface of the reaction tank while rotating a spray nozzle 360°.

The second material may include n-hexane.

The organogel may not be present in the reaction tank.

The solvent substitution tank may be made of a material having lower corrosion resistance, acid resistance, and high-temperature strength than the reaction tank.

The method may further include discharging wastewater generated along with the organogel from the solvent substitution tank before the transfer of the organogel to the dryer, wherein the discharging of wastewater may include controlling, by a controller, the opening and closing of a discharge valve for discharging the wastewater based on the water level of the wastewater measured by a level sensor.

The level sensor may be installed in the solvent substitution tank and may be a radar-type sensor emitting electromagnetic waves in a direction toward an interface between the organogel layer and the wastewater layer.

The method may further include washing the solvent substitution tank after the transfer of the organogel to the dryer.

The washing of the solvent substitution tank after the transfer of the organogel to the dryer may include spraying n-hexane on an inner surface of the solvent substitution tank while rotating a spray nozzle 360°.

### [Advantageous Effects]

According to a method of preparing an aerogel of the present invention, a hydrogel is obtained from water glass in a reaction tank and transferred to a solvent substitution tank to obtain an organogel, and then the organogel is dried in a dryer to obtain aerogel powder. In this case, while a substitution process proceeds in a solvent substitution tank for a long time, the next round of reaction takes place in a reaction tank, and accordingly, the overall production time can be significantly reduced.

In addition, since an organogel is separately produced in a solvent substitution tank, the disruption in mixing raw materials, which occurs when an organogel remains in a reaction tank, can be structurally prevented as compared to a case in which an organogel is produced in a reaction tank. Due to the absence of such a disruption, the quality of a finally produced aerogel can also be improved.

### [Description of Drawings]

FIG. 1 is a flow sheet of an aerogel preparation method according to an embodiment of the present invention.
FIG. 2 is a conceptual diagram showing the arrangement of preparation equipment 100 and the input of materials for implementing the preparation method of FIG. 1.
FIG. 3 is a conceptual diagram showing the specific structure of a solvent substitution tank 130 of FIG. 2.

### [Modes of the Invention]

A first embodiment relates to a method of preparing an aerogel, which includes:
reacting water glass with a first material in a reaction tank to obtain a hydrogel;
transferring the hydrogel to a solvent substitution tank and then reacting the hydrogel with a second material in the solvent substitution tank to obtain an organogel; and
transferring the organogel to a dryer and then drying the organogel in the dryer to obtain aerogel powder.

A second embodiment relates to a method of preparing an aerogel, which includes
reacting water glass with a first material in a reaction tank to obtain a hydrogel;
transferring the hydrogel to a solvent substitution tank and then reacting the hydrogel with a second material in the solvent substitution tank to obtain an organogel; and
transferring the organogel to a dryer and then drying the organogel in the dryer to obtain aerogel powder,
wherein the first material includes pure water, nitric acid, and hexamethyldisilazane (HMDS),
the second material is not input into the reaction tank, and
the second material includes n-hexane.

Hereinafter, an aerogel preparation method according to an exemplary embodiment of the present invention will be described in detail with reference to the accompanying drawings. In this specification, the same or similar elements will be assigned the same or similar reference numerals regardless of embodiments, and their descriptions are the same as the first description.

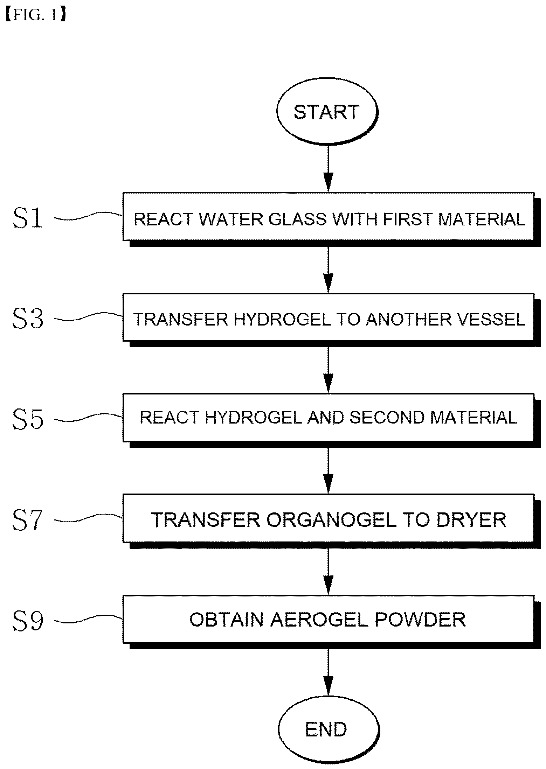

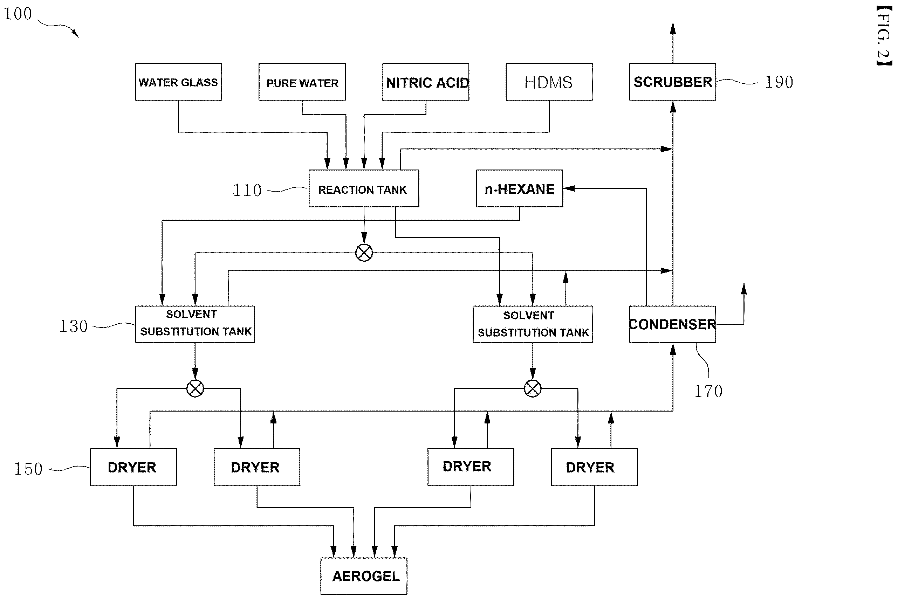

FIG. 1 is a flow sheet of an aerogel preparation method according to an embodiment of the present invention, and FIG. 2 is a conceptual diagram showing the arrangement of preparation equipment 100 and the input of materials for implementing the preparation method of FIG. 1.

Referring to the drawings, the preparation of an aerogel begins with a step (S1) of reacting water glass with a first material.

Water glass first input into a reaction tank 110 is sodium silicate (Na₂SiO₃). Water glass may be left to stand in a storage tank after being measured in an amount required for a reaction before being input to the reaction tank 110. Water glass may be input into the reaction tank 110 in a short time due to gravity.

After the input of water glass into the reaction tank 110, a first material is input into the reaction tank 110. Specifically, the first material may include pure water (demineralized water), nitric acid, and HMDS, which need to be sequentially input into the reaction tank 110.

Since water glass and pure water do not mix well due to a large difference in specific gravity, an agitator may be installed in the reaction tank 110 and used in stirring to sufficiently mix them. The input of raw materials may be performed by inputting nitric acid (HNO₃, 60%) at 1-minute intervals for 3 minutes while stirring water glass and pure water and then inputting HMDS. After the input of HMDS, the reaction may proceed for about 5 minutes. It is preferable that, even during the reaction, the agitator is continuously operated to mix them well.

As pure water is added to water glass, water glass is hydrolyzed to form an aqueous water glass solution. When nitric acid is added to the aqueous water glass solution, the phase is changed to a gel phase, and the pH begins to neutralize. Subsequently, when HMDS is added, the change to a gel phase is accelerated. The total process time in the reaction tank 110 is within 20 minutes.

In order to react water glass with the first material, the temperature inside the reaction tank 110 should be about 45 to 50 °C. To this end, a heating jacket that covers the housing of the reaction tank 110 heats the reaction tank 110 using hot water. As the reaction smoothly proceeds, the temperature inside the reaction tank 110 may become about 60 °C.

The reaction scheme for the above reaction is as follows.

Na₂SiO₃ + 2HNO₃ +HMDS → 2NaNO₃ + NH₃ + Aerogel (Si₃(CH₃)₆O₃)ₙ

Referring to the above reaction scheme, HMDS reacts with nitric acid to generate ammonia (NH₃) gas, and this gas is treated using a scrubber 190. The resulting wastewater is transferred to a wastewater treatment facility and treated there. Whether the reaction in the reaction tank 110 is completed may be determined by confirming the pH of a reaction product.

When the reaction is completed, a hydrogel is formed in the reaction tank 110. The produced hydrogel is discharged from the reaction tank 110.

After the reaction tank 110 is emptied, the reaction tank 110 may be washed. For washing, a spray nozzle is operated in the reaction tank 110. The spray nozzle may spray pure water on an inner surface of the reaction tank 110 while rotating 360°. Accordingly, the reaction tank 110 in a thoroughly washed state receives the next round of water glass and the first material. The resulting wastewater is transferred to the wastewater treatment facility and treated there.

The hydrogel discharged from the reaction tank 110 is transferred to another vessel, that is, a solvent substitution tank 130 (S3). The solvent substitution tank 130 may be manufactured using a different material from that of the reaction tank 110. Specifically, the reaction tank 110 should be manufactured, for example, using STS316L to cope with corrosion and temperature drop in response to strong acids and strong bases. On the other hand, since the solvent substitution tank 130 is not like that, STS304, which is a material having lower corrosion resistance, acid resistance, and high-temperature strength than the reaction tank 110, is sufficient.

Therefore, the solvent substitution tank 130 may be manufactured at about 40% of the material costs of the reaction tank 110. Since the solvent substitution tank 130 should be twice as large as the reaction tank 110, even when the solvent substitution tank 130 is manufactured as separate units, the total cost is reduced compared to when only one large reaction tank 110 is manufactured.

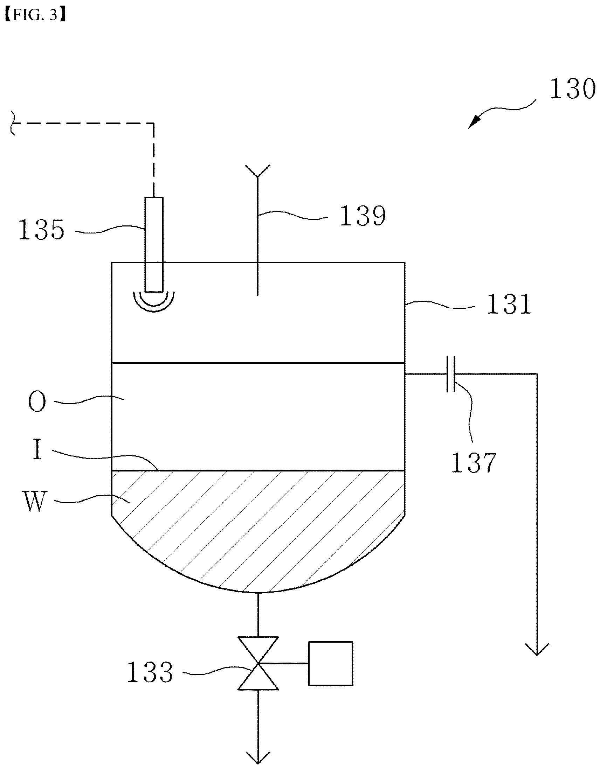

In the solvent substitution tank 130, a second material, for example, n-hexane is added to the hydrogel (S5). The hydrogel undergoes a condensation reaction with n-hexane and thus is substituted to form an organogel and water. The substitution process is completed within 40 minutes while maintaining a temperature of 50 °C at atmospheric pressure. This time is about twice as long as the time in the reaction tank 110. The resulting wastewater is discharged to the wastewater treatment facility, which will be described with reference to FIG. 3.

Referring to FIGS. 1 and 2 again, the organogel is transferred to a dryer 150 (S7). After the solvent substitution tank 130 is emptied, the solvent substitution tank 130 may be washed. The washing may be performed by spraying n-hexane on an inner surface of the solvent substitution tank 130. n-Hexane may be thoroughly sprayed on the inner surface of the solvent substitution tank 130 by a spray nozzle rotating 360°.

In the dryer 150, the organogel becomes aerogel powder through a drying process (S9). Specifically, the organogel input into the dryer 150 is stirred under vacuum at about 130 °C. As a result, n-hexane and the residual moisture evaporate, and the phase of the organogel is changed to a solid phase. n-Hexane may be separated, transferred to a condenser 170, liquefied, and re-input into the solvent substitution tank 130. The reuse rate of n-hexane may be about 90%, and a certain amount needs to be periodically discharged to maintain quality. In order to compensate for this, fresh n-hexane is additionally mixed with the reused n-hexane. Through the drying, the aerogel powder is subjected to a shearing force, and its pores are uniformized. The aerogel powder is transferred to a silo and stored, and a required amount may be shipped.

The solvent substitution tank 130 will be further described with reference to FIG. 3. FIG. 3 is a conceptual diagram showing the specific structure of the solvent substitution tank 130 of FIG. 2.

Referring to the drawing, an organogel O and wastewater W are produced by a condensation reaction in a housing 131 of the solvent substitution tank 130. Here, the organogel O is located above the wastewater W due to the difference in specific gravity. As an agitator is operated in the housing 131, layer separation of the organogel O and the wastewater W may occur more easily.

The wastewater W should be discharged to a wastewater treatment facility via a discharge valve 133. The discharge valve 133 should be controlled to open only until the wastewater W is discharged. To this end, a controller (not shown) that controls the opening and closing of the discharge valve 133 is operated based on the sensing results of a level sensor 135.

The level sensor 135 measures the water level of the wastewater W by determining an interface I between the organogel O and the wastewater W. To this end, the level sensor 135 may be a radar-type sensor installed in the housing 131. Accordingly, the level sensor 135 may measure the height of the interface I in a non-contact manner by emitting electromagnetic waves in a direction toward the interface I.

The controller may control the discharge valve 133 based on the sensing results of the level sensor 135 to open and close according to the exact water level of the wastewater W. This prevents the organogel O from being discharged along with the wastewater W.

After the discharging of the wastewater W, the organogel O may be transferred to the dryer 150 via another line 137. Furthermore, ammonia generated in the housing 131 may be transferred to the scrubber 190 via a separate line 139.

The above-described aerogel preparation method is not limited to the composition and operation method of the embodiments described above. The above embodiments may be configured so that various modifications can be made by selectively combining all or some of the embodiments.

### Example

Water glass was allowed to react with pure water, nitric acid, and HMDS in a reaction tank to prepare a hydrogel, and then the hydrogel was transferred to a solvent substitution tank and allowed to react with n-hexane to obtain an organogel. The obtained organogel was dried to prepare aerogel powder. The thermal conductivity of the prepared aerogel powder was measured to be 0.01835 W/mk.

### Comparative Example

Water glass was allowed to react with pure water, nitric acid, HMDS, and n-hexane in a reaction tank to prepare a hydrogel, and then the hydrogel was transferred to a solvent substitution tank to obtain an organogel. The obtained organogel was dried to prepare aerogel powder. The thermal conductivity of the prepared aerogel powder was measured to be 0.02147 W/mk.

### [Industrial Applicability]

According to the method of preparing an aerogel of the present invention, a hydrogel is obtained from water glass in a reaction tank and transferred to a solvent substitution tank to obtain an organogel, and then the organogel is dried in a dryer to obtain aerogel powder. In this case, while a substitution process proceeds in a solvent substitution tank for a long time, the next round of reaction takes place in a reaction tank, and accordingly, the overall production time can be significantly reduced.

In addition, since an organogel is separately produced in a solvent substitution tank, the disruption in mixing raw materials, which occurs when an organogel remains in a reaction tank, can be structurally prevented as compared to a case in which an organogel is produced in a reaction tank. Due to the absence of such a disruption, the quality of a finally produced aerogel can also be improved.

## Claims

1. A method of preparing an aerogel, comprising:
reacting water glass with a first material in a reaction tank to obtain a hydrogel;
transferring the hydrogel to a solvent substitution tank and then reacting the hydrogel with a second material in the solvent substitution tank to obtain an organogel; and
transferring the organogel to a dryer and then drying the organogel in the dryer to obtain aerogel powder,
wherein the first material includes pure water, nitric acid, and hexamethyldisilazane (HMDS),
the second material is not input into the reaction tank, and
the second material includes n-hexane.

2. The method of claim 1, wherein the pure water, nitric acid, and HMDS are sequentially input into the reaction tank.

3. The method of claim 1, further comprising washing the reaction tank after the transfer of the hydrogel to the solvent substitution tank.

4. The method of claim 3, wherein the washing of the reaction tank after the transfer of the hydrogel to the solvent substitution tank includes spraying pure water on an inner surface of the reaction tank while rotating a spray nozzle 360°.

5. The method of claim 1, wherein the organogel is not present in the reaction tank.

6. The method of claim 1, wherein the solvent substitution tank is made of a material having lower corrosion resistance, acid resistance, and high-temperature strength than the reaction tank.

7. The method of claim 1, further comprising discharging wastewater generated along with the organogel from the solvent substitution tank before the transfer of the organogel to the dryer,
wherein the discharging of wastewater includes controlling, by a controller, the opening and closing of a discharge valve for discharging the wastewater based on the water level of the wastewater measured by a level sensor.

8. The method of claim 7, wherein the level sensor is installed in the solvent substitution tank and is a radar-type sensor emitting electromagnetic waves in a direction toward an interface between the organogel layer and the wastewater layer.

9. The method of claim 1, further comprising washing the solvent substitution tank after the transfer of the organogel to the dryer.

10. The method of claim 9, wherein the washing of the solvent substitution tank after the transfer of the organogel to the dryer includes spraying n-hexane on an inner surface of the solvent substitution tank while rotating a spray nozzle 360°.
